# EUROPÄISCHE PATENTSCHRIFT

(11) **EP 2 027 217 B1**
(45) Veröffentlichungstag und Bekanntmachung des Hinweises auf die Patenterteilung: **20.08.2014**
(21) Anmeldenummer: 07703049.2
(22) Anmeldetag: 26.01.2007
(51) Int. Cl.: C09D 7/12, C08G 18/62, C09D 5/00, C08G 18/28, C08K 5/5333, C08K 5/544, C08K 5/5455

(54) **VERWENDUNG VON HÄRTBAREN GEMISCHEN, ENTHALTEND SILANGRUPPENHALTIGE VERBINDUNGEN SOWIE PHOSPHONSÄUREDIESTER ODER DIPHOSPHONSÄUREDIESTER, ALS HAFTVERMITTLER**
USE OF CURABLE MIXTURES COMPRISING SILANE GROUP-CONTAINING COMPOUNDS AND PHOSPHONIC ACID DIESTER OR DIPHOSPHONIC ACID DIESTER AS ADHESIVES
UTILISATION DE MÉLANGES DURCISSABLES CONTENANT DES COMPOSÉS QUI COMPORTENT DES GROUPES SILANE, AINSI QUE DES DIESTERS DE L'ACIDE PHOSPHONIQUE OU DES DIESTERS DE L'ACIDE DIPHOSPHONIQUE, EN TANT QU'AGENTS ADHÉSIFS

(30) Priorität: 29.05.2006 DE 102006024823
(43) Veröffentlichungstag der Anmeldung: 25.02.2009
(73) Patentinhaber: BASF Coatings GmbH, 48165 Münster (DE)
(72) Erfinder: POPPE, Andreas, 97753 Karlstadt (DE); SCHULZE-FINKENBRINK, Guido, 48165 Münster (DE)
(74) Vertreter: Leifert & Steffan
(86) Internationale Anmeldenummer: PCT/EP2007/000660
(87) Internationale Veröffentlichungsnummer: WO 2007/137632

(56) Entgegenhaltungen:
- EP-A1- 1 195 397
- WO-A-2007/033786
- DE-A1- 10 132 654

## Beschreibung

### Gebiet der Erfindung

Die vorliegende Erfindung betrifft die neue Verwendung von härtbaren Gemischen, enthaltend silangruppenhaltige Verbindungen sowie Phosphonsäurediester und/oder Diphosphonsäurediester als Haftvermittler, insbesondere als Haftvermittler in Verbunden umfassend mindestens ein Substrat, mindestens eine Beschichtung, mindestens eine Klebschicht und mindestens eine Scheibe.

Außerdem betrifft die vorliegende Erfindung ein neues Verfahren zur Herstellung von neuen Verbunden, umfassend mindestens ein Substrat, mindestens eine Beschichtung, mindestens eine Klebschicht und mindestens eine Scheibe, das unter Verwendung von härtbaren Gemischen, enthaltend silangruppenhaltige Verbindungen sowie Phosphonsäurediester und/oder Diphosphonsäurediester, durchgeführt wird.

Des Weiteren betrifft die vorliegende Erfindung neue Verbunde, umfassend mindestens ein Substrat, mindestens eine Beschichtung, mindestens eine Klebschicht und mindestens eine Scheibe, die unter Verwendung von härtbaren Gemischen, enthaltend silangruppenhaltige Verbindungen sowie Phosphonsäurediester und/oder Diphosphonsäurediester, herstellbar sind.

Nicht zuletzt betrifft die vorliegende Erfindung neue thermisch härtbare Gemische, die Polyester und härtbare Gemische, enthaltend silangruppenhaltige Verbindungen sowie Phosphonsäurediester und/oder Diphosphonsäurediester, enthalten.

### Stand der Technik

Phosphonsäurediester sind Ester der Phosphonsäure [HP(O)(OH)₂], die mit der Phosphorigen Säure [P(OH)₃] tautomer ist. Die Phosphonsäurediester werden häufig nicht ganz korrekt auch als sekundäre Phosphite bezeichnet. Indes sind die echten Derivate der Phosphorigen Säure nur die Triester.

Diphosphonsäurediester sind die Diester der Diphosphonsäure:

(HO)(O)PH-O-PH(O)(OH),

die früher auch als Diphosphorige Säure, bezeichnet wurde.
(vgl. hierzu Römpp Lexikon der Chemie, Georg Thieme Verlag, Stuttgart, New York, 1990, »Phosphite«, »Phosphonate«, »Phosphonsäure«, »Diethylphosphit« und »Dimethylphosphit«).

Härtbare Gemische, insbesondere Beschichtungsstoffe, speziell Klarlacke, die Polyester als Bindemittel enthalten, werden bekanntermaßen in der Automobilerstlackierung eingesetzt, weil sie thermisch gehärtete Gemische, insbesondere Beschichtungen, speziell Klarlackierungen, die Oberflächen mit einem hervorragenden optischen Gesamteindruck (Appearance) haben, liefern. Allerdings lassen sie in Verbunden, umfassend mindestens ein Substrat, mindestens eine Beschichtung, mindestens eine Klebschicht und mindestens eine Scheibe, in ihrer Haftungswirkung zu wünschen übrig.

In der internationalen Patentanmeldung WO 03/011992 wird vorgeschlagen, die Haftung in Mehrschichtlackierungen durch die Verwendung von carbinolfunktionellen Siloxanen, die mit Borsäure umgesetzt sind, zu verbessern. Solche Haftvermittler sind aber oberflächenaktiv, so dass sie mit anderen Additiven, insbesondere Siliconadditiven, wechselwirken und so den Verlauf der Beschichtungen beeinträchtigen.

Speziell im Hinblick auf Automobillackierungen wird in der amerikanischen Patentanmeldung US 2005/0074617 der Einsatz von silanhaltigen Acrylatcopolymeren beschrieben, die außerdem noch Hydroxylgruppen aufweisen können. Es wird eine starke Wechselwirkung, bzw. ein Einfluß der Silangruppen auf bzw. mit anderen funktionellen Gruppen, insbesondere Hydroxygruppen beschrieben. Diese Wechselwirkungen bedingen u. a. Einschränkungen in den Freiheitsgraden bei der Harzsynthese bzw. bei der Formulierung von Klarlacken für die Automobilerstlackierung (OEM).

Der Einsatz von silanhaltigen Haftvermittlern ist im Stand der Technik zwar bekannt, siehe z. B. die deutschen Patentanmeldungen DE 100 51 485 A1, DE 28 09 588 A oder DE 25 59 259 A oder die internationale Patentanmeldung WO 2005/105938, die Wirkung dieser Substanzen allein ohne zusätzliche Aktivatoren ist jedoch begrenzt und reicht insbesondere für spezielle Anwendungen im Bereich der polyesterhaltigen Zweikomponentenklariacke für die Automobilerstlackierung nicht aus.

DE 101 32 854 beschreibt die Herstellung von Verbindungen durch Umsetzung von silanhaltigen Edukten mit Phosphonsäurediester. Die erhaltenen Verbindungen können weiter zu Kieselsäure-Polykondensate polymerisiert werden, die dann in Beschichtungsmassen und Klebstoffen eingesetzt werden können.

In der nicht vorveröffentlichten deutschen Patentanmeldung DE 10 2005 045 228.0-44 wird beschrieben, dass silanhaltige Gemische mit geeigneten Zusätzen auf der Basis von Phosphonsäurederivaten besonders stabile dreidimensionale Netzwerke als Umsetzungsprodukte bilden können. Die Verwendung als Haftvermittler wird nicht beschrieben.

### Aufgabenstellung

Der vorliegenden Erfindung liegt die Aufgabe zugrunde, neue Haftvermittler, insbesondere neue Haftvermittler für Verbunde, umfassend mindestens ein Substrat, mindestens eine Beschichtung, mindestens eine Klebschicht und mindestens eine Scheibe, zu finden, die die Nachteile des Standes der Technik nicht mehr aufweisen.

Die neuen Haftvermittler sollen eine hervorragende Haftung innerhalb der Beschichtungen bewirken, so dass es bei der mechanischen Belastung von Verbunden, umfassend mindestens ein Substrat, mindestens eine Beschichtung, mindestens eine Klebschicht und mindestens eine Scheibe, nicht zu einer Enthaftung zwischen Substrat und Beschichtung, innerhalb der Beschichtung und zwischen Beschichtung und Klebschicht kommt, sondern nur zu einem Kohäsionsbruch innerhalb der Klebschicht.

Außerdem sollen die neuen Haftvermittler die einfache und genau reproduzierbare Herstellung von Verbunden, umfassend mindestens ein Substrat, mindestens eine Beschichtung, mindestens eine Klebschicht und mindestens eine Scheibe, gestatten.

Des Weiteren sollen sich die neuen Haftvermittler für die Herstellung von thermisch härtbaren Gemischen, insbesondere von Beschichtungsstoffen, speziell von Klarlacken, eignen, die lagerstabil sind bzw. eine lange Topfzeit oder Verarbeitungszeit aufweisen.

Nicht zuletzt sollen die neuen thermisch härtbaren Gemische, insbesondere die Beschichtungsstoffe, speziell die Klarlacke, gehärtete Materialien, insbesondere Beschichtungen, speziell Klarlackierungen, liefern, die besonders hart, abriebfest, hoch kratzfest, besonders chemikalienbeständig und etchbeständig sowie als Klariackierungen besonders hochglänzend und klar sind.

Insbesondere sollen die neuen Klarlackierungen im Rahmen von Mehrschichtlackierungen hervorragende Haftungseigenschaften aufweisen, so dass es in Verbunden, umfassend mindestens ein Substrat, mindestens eine Mehrschichtläckierung mit mindestens einer neuen Klarlackierung, mindestens einer Klebschicht und mindestens einer Scheibe, bei der mechanischen Belastung nur zu einem Kohäsionsbruch innerhalb der Klebschicht kommt.

### Lösung

Demgemäß wurde die neue Verwendung von den härtbaren Gemischen (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen,
als Haftvermittler gefunden, wobei die Haftvermittler in Verbunden, umfassend mindestens ein Substrat, mindestens eine Beschichtung, mindestens eine Klebschicht und mindestens eine Scheibe, verwendet werden, wobei die Haftvermittler in der mindestens einen Beschichtung vorliegen, und die Scheibe aus der Gruppe, bestehend aus planaren, im Wesentlichen planaren, und dreidimensional geformten, optisch transparenten Formteilen ausgewählt wird, was im Folgenden als »erfindungsgemäße Verwendung« bezeichnet wird.

Außerdem wurde das neue Verfahren zur Herstellung von Verbunden, umfassend mindestens ein Substrat, mindestens eine Beschichtung, mindestens eine Klebschicht und mindestens eine Scheibe, gefunden, das von der erfindungsgemäßen Verwendung Gebrauch macht und das im Folgenden als »erfindungsgemäßes Verfahren« bezeichnet wird

Des Weiteren wurden die neuen Verbunde, umfassend mindestens ein Substrat, mindestens eine Beschichtung, mindestens eine Klebschicht und mindestens eine Scheibe gefunden, die unter Nutzung der erfindungsgemäßen Verwendung herstellbar sind und die im Folgenden als »erfindungsgemäße Verbunde« bezeichnet werden.

Nicht zuletzt wurden die neuen thermisch härtbaren Gemische gefunden, die ein härtbares Gemisch (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen, und mindestens einen thermisch härtbaren Polyester (C) enthalten und die im folgenden als »erfindungsgemäße Gemische« bezeichnet werden.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Verwendung, des erfindungsgemäßen Verfahrens, der erfindungsgemäßen Verbunde und der erfindungsgemäßen Gemische gelöst werden konnte.

Insbesondere war es überraschend, dass die gemäß der erfindungsgemäßen Verwendung einzusetzenden Haftvermittler eine hervorragende Haftung innerhalb der Beschichtungen bewirkten, so dass es bei der mechanischen Belastung der erfindungsgemäßen Verbunde, umfassend mindestens ein Substrat, mindestens eine Beschichtung, mindestens eine Klebschicht und mindestens eine Scheibe, nicht zu einer Enthaftung zwischen Substrat und Beschichtung, innerhalb der Beschichtung und zwischen Beschichtung und Klebschicht kam, sondern nur zu einem Kohäsionsbruch innerhalb der Klebschicht.

Außerdem gestattete die erfindungsgemäße Verwendung die einfache und genau reproduzierbare Herstellung von erfindungsgemäßen Verbunden nach dem erfindungsgemäßen Verfahren.

Des Weiteren konnten aufgrund der erfindungsgemäßen Verwendung die erfindungsgemäßen Gemische, insbesondere die erfindungsgemäßen Beschichtungsstoffe, speziell die erfindungsgemäßen Klarlacke, bereitgestellt werden, die lagerstabil waren bzw. eine lange Topfzeit oder Verarbeitungszeit aufwiesen.

Nicht zuletzt lieferten die erfindungsgemäßen Gemische, insbesondere die erfindungsgemäßen Beschichtungsstoffe, speziell die erfindungsgemäßen Klarlacke, neue gehärtete Materialien, insbesondere neue Beschichtungen, speziell neue Klarlackierungen, die besonders hart, abriebfest, hoch kratzfest, besonders chemikalienbeständig und etchbeständig sowie als Klarlackierungen besonders hochglänzend und klar waren.

Insbesondere wiesen die erfindungsgemäßen Klarladcierungen im Rahmen von neuen Mehrschichtlackierungen hervorragende Haftungseigenschaften auf, so dass es in den erfindungsgemäßen Verbunden, umfassend mindestens ein Substrat, mindestens eine Mehrschichtlackierung mit mindestens einer erfindungsgemäßen Klarlackierung, mindestens einer Klebschicht und mindestens einer Scheibe, bei der mechanischen Belastung nur zu einem Kohäsionsbruch innerhalb der Klebschicht kam.

### Ausführliche Beschreibung der Erfindung

Die erfindungsgemäße Verwendung betrifft die Verwendung von erfindungsgemäßen härtbaren Gemischen (A/B) als Haftvermittler, wobei die Haftvermittler in Verbunden, umfassend mindestens ein Substrat, mindestens eine Beschichtung, mindestens eine Klebschicht und mindestens eine Scheibe, verwendet werden, wobei die Haftvermittler in der mindestens einen Beschichtung vorliegen, und die Scheibe aus der Gruppe, bestehend aus planaren, im Wesentlichen planaren, und dreidimensional geformten, optisch transparenten Formteilen ausgewählt wird.

»Haftvermittler« ist die Sammelbezeichnung für alle Stoffe, die zur Verbesserung der Haftfestigkeit miteinander zu kombinierender Werkstoffe (z. B. Beschichtungen auf verschiedenen Untergründen wie Metall, Kunststoff Holz, Glas etc.) führen (vgl. Römpp Lexikon Lacke und Druckfarben, Georg Thieme Verlag, Stuttgart, New York, 1998, »Haftvermittler«).

Die erfindungsgemäß zu verwendenden härtbaren Gemische (A/B) enthalten im Wesentlichen die Bestandteile (A) und (B) oder sie bestehen aus diesen.

Im wesentlichen" bedeutet, dass die härtbaren Gemische (A/B) nur solche zusätzlichen Stoffe und diese nur in einer solchen Menge enthalten, dass die haftvermittelnde Wirkung nicht beeinträchtigt wird. Die zusätzlichen Stoffe können aus den nachstehend beschriebenen Zusatzstoffen (D) ausgewählt werden. Bevorzugt werden organische Lösemittel und Stabilisatoren verwendet. Besonders bevorzugt werden Glykole, ganz besonders bevorzugt Propylenglykol, Butylglykol und Homologe mit 5 bis 10 Kohlenstoffatomen im Molekül und insbesondere Propylenglykol und Butylglykol, als Stabilisatoren eingesetzt. Besonders bevorzugt werden die organischen Lösemittel und Stabilisatoren in einer Menge von 5 bis 50 Gew.-%, insbesondere 10 bis 40 Gew.-%, jeweils bezogen auf ein härtbares Gemisch (A/B/D), verwendet.

Für die erfindungsgemäße Verwendung werden die Phosphonsäurediester und die Diphosphonsäurediester (A) vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern, ausgewählt.

Bevorzugt werden die acyclischen Phosphonsäurediester (A) aus der Gruppe, bestehend aus acyclischen Phosphonsäurediestern (A) der allgemeinen Formel I: 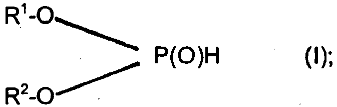 ausgewählt.

In der allgemeinen Formel I sind die Reste R¹ und R² gleich oder voneinander verschieden; vorzugsweise sind sie gleich.

Die Reste R¹ und R² werden aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R¹ oder R² und dem Sauerstoffatom der O-P-Gruppe symbolisiert;
- substituiertem und unsubstituiertem Alkylaryl-, Arylalkyl-, Alkylcycloalkyl-, Cycloalkylalkyl-, Arylcycloatkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen aufweisen und wobei der Strich jeweils die kovalente Bindung zwischen einem Kohlenstoffatom des Rests R¹ und R² und dem Sauerstoffatom der O-P-Gruppe symbolisiert; und
- substituiertem und unsubstituiertem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, wobei der Strich die kovalente Bindung zwischen einem Kohlenstoffatom des Rests und dem Sauerstoffatom der O-P-Gruppe symbolisiert;
ausgewählt.

Bevorzugt werden die cyclischen Phosphonsäurediester (A) aus der Gruppe, bestehend aus den cyclischen Phosphonsäurediestern (A) der allgemeinen Formel II: 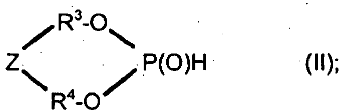 ausgewählt.

In der allgemeinen Formel II sind die Reste R³ und R⁴ gleich oder voneinander verschieden; vorzugsweise sind sie gleich.

Die Reste R³ und R⁴ werden aus der Gruppe, bestehend aus:
- substituiertem und unsubstituiertem, zweibindigem Alkyl- mit 1 bis 20, vorzugsweise 1 bis 10 und insbesondere 1 bis 6 Kohlenstoffatomen, Cycloalkyl- mit 3 bis 20, vorzugsweise 3 bis 10 und insbesondere 3 bis 6 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R³ oder R⁴ und dem Sauerstoffatom der O-P-Gruppe symbolisiert;
- substituiertem und unsubstituiertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyt-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils die kovalente Bindung zwischen einem Kohlenstoffatom des Rests R³ und R⁴ und dem Sauerstoffatom der O-P-Gruppe symbolisiert; und
- substituiertem und unsubstituiertem, zweibindigem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert;
ausgewählt.

In der allgemeinen Formel II steht die Variable Z für
- eine kovalente Bindung zwischen einem Atom des Rests R³ und einem Atom des Rests R⁴;
- eine zweibindige, verküpfende Gruppe, ausgewählt aus der Gruppe, bestehend aus Sauerstoffatom, substituiertem, insbesondere mit Sauerstoff substituiertem, und unsubstituiertem Schwefelatom, substituiertem, insbesondere mit Alkyl substitiuiertem, Stickstoffatom, substituiertem, insbesondere mit Sauerstoff substituiertem, Phosphoratom und substituiertem, insbesondere mit Alkyl und Alkoxy substituiertem Siliziumatom, insbesondere Sauerstoffatom; oder
- eine zweibindige, verküpfende Gruppe, ausgewählt aus der Gruppe, bestehend aus substituiertem und unsubstituiertem, mindestens ein Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, enthaltendem oder von Heteroatomen freiem Alkyl mit 1 bis 10, vorzugsweise 1 bis 6 und insbesondere 1 bis 4 Kohlenstoffatomen, Cycloalkyl mit 3 bis 10, vorzugsweise 3 bis 6 und insbesondere 6 Kohlenstoffatomen und Aryl mit 5 bis 10 und insbesondere 6 Kohlenstoffatomen.

Bevorzugt werden die acyclischen Diphosphonsäurediester (A) aus der Gruppe, bestehend aus den acyclischen Diphosphonsäurediestern (A) der allgemeinen Formel III:

(R¹-O)(O)PH-O-PH(O)(O-R²) (III);

worin die Variablen die vorstehend angegebene Bedeutung haben, ausgewählt.

Bevorzugt werden die cyclischen Diphosphonsäurediester (A) aus der Gruppe, bestehend aus den cyclischen Diphosphonsäurediestern (A) der allgemeinen Formel IV: 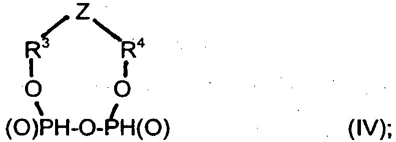 worin die Variablen die vorstehend angegebene Bedeutung haben, ausgewählt.

Als Substituenten für die Reste R¹, R², R³ und R⁴ kommen alle Gruppen und Atome in Betracht, die die Wirkung der Phosphonsäurediester und der Diphosphonsäurediester (A) nicht beeinträchtigen, die Härtungsreaktionen in den erfindungsgemäßen Gemischen nicht inhibieren, nicht zu unerwünschten Nebenreaktionen führen und keine toxische Wirkung hervorrufen. Beispiele geeigneter Substituenten sind Halogenatome, Nitrilgruppen oder Nitrogruppen, bevorzugt Halogenatome, insbesondere Fluoratome, Chloratome und Bromatome.

Vorzugsweise sind die Reste R¹, R², R³ und R⁴ unsubstituiert.

Bevorzugt werden die Reste R¹ und R² aus der Gruppe, bestehend aus Phenyl, Methyl und Ethyl, ausgewählt. Besonders bevorzugt wird Phenyl verwendet.

Bevorzugt werden die acyclischen Phosphonsäurediester (A) der allgemeinen Formel I verwendet.

Besonders bevorzugt werden die Reste R¹ und R² der acyclischen Phosphonsäurediester (A) der allgemeinen Formel I aus der Gruppe, bestehend aus Phenyl, Methyl und Ethyl, ausgewählt. Insbesondere wird Phenyl verwendet.

Ein Beispiel für einen ganzen besonders gut geeigneten Phosphonsäurediester (A) der allgemeinen Formel I ist Diphenylphosphonat, das manchmal von der Fachwelt (nicht ganz korrekt) auch als Diphenylphosphit bezeichnet wird.

Die erfindungsgemäßen Gemische enthalten mindestens eine, insbesondere eine, Verbindung (B), enthaltend mindestens zwei, insbesondere mindestens drei, kondensierbare Silangruppen.

In einer gegebenen Verbindung (B) ist eine Grundstruktur mit mindestens zwei, insbesondere mindestens drei, kondensierbaren Silangruppen verknüpft.

Vorzugsweise haben die kondensierbare Silangruppen die allgemeine Formel V:

**-SiR⁵mR⁶₃₋ₘ** (V),

worin der Index und die Variablen die folgende Bedeutung haben:
- m: ganze Zahl von 1 bis 3, insbesondere 3;
- R⁵: einbindiges, kondensierbares Atom oder einbindiger, kondensierbarer, organischer Rest;
- R⁶: einbindiger, inerter, organischer Rest.

Vorzugsweise werden die einbindigen, kondensierbaren Atome aus der Gruppe, bestehend aus Wasserstoffatomen, Fluoratomen, Chloratomen und Bromatomen, ausgewählt.

Vorzugsweise werden die einbindigen, kondensierbaren, organischen Reste R⁵ aus der Gruppe, bestehend aus Hydroxylgruppen und den Gruppen der allgemeinen Formel VI:

**-R⁷-R⁶** (VI),

worin die Variable R⁷ für ein zweibindiges, verküpfendes Atom oder eine zweibindige, verknüpfende, funktionelle Gruppe steht und R⁶ die vorstehend angegebene Bedeutung hat.

Vorzugsweise werden die einbindigen, inerten, organischen Reste R⁶ aus der Gruppe, bestehend aus
- einbindigem, substituiertem und unsubstituiertem Alkyl vorzugsweise mit 1 bis 20, bevorzugt 2 bis 16 und insbesondere 2 bis 10 Kohlenstoffatomen, Cycloalkylvorzugsweise mit 3 bis 20, bevorzugt 3 bis 16 und insbesondere 3 bis 10 Kohlenstäffatomen und Aryl- vorzugsweise mit 5 bis 20, bevorzugt 6 bis 14 und insbesondere 6 bis 10 Kohlenstoffatomen;
- einbindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- einbindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom; Phosphoratom und Siliziumatom, insbesondere Sauerstoffatom, Schwefelatom und Stickstoffatom;
wobei die vorstehend beschriebenen Substituenten in Betracht kommen, ausgewählt.

Bevorzugt werden die zweibindigen, verküpfenden Atome R⁷ aus der Gruppe, bestehend aus Sauerstoffatomen und Schwefelatomen, insbesondere Sauerstoffatomen, ausgewählt.

Bevorzugt werden die zweibindigen, verküpfenden, funktionellen Gruppen R⁷ aus der Gruppe, bestehend aus -C(=R⁸)-, -R⁷-C(=R⁸)-, -C(=R⁸)-R⁷-, -NH- und -N(-R⁶)-, ausgewählt, worin die Variable R⁸ für ein zweibindiges Atom steht, worin die Variable R⁷ die vorstehend angegebene Bedeutung hat und insbesondere für ein Sauerstoffatom oder ein Schwefelatom steht und die Variable R⁶ die vorstehend angegebene Bedeutung hat und wobei "=" eine Doppelbindung symbolisiert und die durch den linken äußeren Ergänzungsstrich symbolisierte kovalente Bindung die Gruppe der allgemeinen Formel VI mit dem Siliziumatom der Gruppe der allgemeinen Formel V verknüpft.

Insbesondere werden die zweibindigen Atome R⁸ aus der Gruppe, bestehend aus Sauerstoffatomen und Schwefelatomen, insbesondere Sauerstoffatomen, ausgewählt.

Ganz besonders bevorzugt werden die zweibindigen, verküpfenden Atome R⁷ verwendet.

Insbesondere werden die Silangruppen der allgemeinen Formel V aus der Gruppe, bestehend aus Trimethoxysilyl- und Triethoxysilyl-Gruppen, ausgewählt.

Die Verbindungen (B) können monomer, oligomer oder polymer aufgebaut sein, d. h., sie können eine monomere, eine oligomere oder eine polymere Grundstruktur aufweisen.

»Monomer« bedeutet, dass die betreffende Verbindung (B) bzw. ihre Grundstruktur im Wesentlichen aus einer Struktureinheit oder aus zwei Struktureinheiten, die gleich oder voneinander verschieden sein können, aufgebaut ist.

»Oligomer« bedeutet, dass die betreffende Verbindung (B) bzw. ihre Grundstruktur im statistischen Mittel aus 3 bis 12 monomeren Struktureinheiten, die gleich oder voneinander verschieden sein können, aufgebaut ist.

»Polymer« bedeutet, dass die betreffende Verbindung (B) bzw. ihre Grundstruktur im statistischen Mittel aus mindestens 8 monomeren Struktureinheiten, die gleich oder voneinander verschieden sein können, aufgebaut ist:

Ob eine Verbindung (B) bzw. ihre Grundstruktur, die im statistischen Mittel aus 8 bis 12 monomeren Struktureinheiten aufgebaut ist, vom Fachmann als Oligomer oder als Polymer angesehen wird, richtet sich insbesondere nach dem zahlenmittleren und massenmittleren Molekulargewicht einer solchen Verbindung (B) oder Grundstruktur. Sind die Molekulargewichte vergleichsweise hoch, wird man von einem Polymeren sprechen, sind sie vergleichsweise niedrig, von einem Oligomeren.

Die monomeren Grundstrukturen der Verbindungen (B) leiten sich von üblichen und bekannten, niedermolekularen, organischen Verbindungen ab.

Die oligomeren und polymeren Grundstrukturen der Verbindungen (B) leiten sich vorzugsweise von den üblichen und bekannten, organischen und metallorganischen Oligomeren und Polymeren ab. Diese können die unterschiedlichsten Strukturen haben. Beispielsweise können sie linear, sternförmig, kammförmig oder unregelmäßig verzweigt, dendrimer oder ringförmig sein, wobei mehr als eine dieser Strukturen in einer Verbindung (B) vorliegen kann. Dabei können die Strukturen eine statistische und/oder blockförmige Verteilung der monomeren Struktureinheiten aufweisen.

Bevorzugt leiten sich die oligomeren und polymeren Grundstrukturen der Verbindungen (B) von den üblichen und bekannten, durch radikalische, anionische oder kationische Polymerisation olefinisch oder acetylenisch, vorzugsweise olefinisch, ungesättigter Monomere herstellbaren Oligomeren und Polymeren, durch Polykondensation herstellbaren Oligomeren und Polymeren oder durch Polyaddition herstellbaren Oligomeren und Polymeren ab.

Besonders bevorzugt leiten sich die oligomeren und polymeren Grundstrukturen der Verbindungen (B) von den üblichen und bekannten Polyolefinen, Polystyrolen, Polyacrylnitrilen, (Meth)Acrylat(co)polymerisaten, Polyestern, Polyamiden, Polyphenylenoxiden und Polyurethanen ab.

Besonders bevorzugt enthalten die Grundstrukturen der Verbindungen (B) mindestens eine Gruppe und insbesondere mindestens zwei Gruppen, ausgewählt aus der Gruppe, bestehend aus den Gruppen der allgemeinen Formeln (VII 1), (VII 2) und (VII 3):

**-R¹⁰-R¹¹-R¹²-** (VII 1),

**-R¹⁰-R¹¹-R¹²=** (VII 2)

und

**-R¹⁰-R¹¹-R¹²<** (VII3),

worin die Variablen R¹⁰, R¹¹ und R¹² die nachstehend bei der allgemeinen Formel VII im Detail erläuterte Bedeutung haben.

Ganz besonders bevorzugt haben die Verbindungen (B) die allgemeinen Formel VII:

**R⁹{-R¹⁰-R¹¹-R¹²[-R¹³]ₙ[-R¹⁴(-R¹⁵)ₒ]ₚ}_{q}** (VII),

worin die Indizes und die Variablen die folgende Bedeutung haben:
- n: 0 oder 1;
- o: 1, 2 oder 3;
- p: 1 oder 2;
- q: ganze Zahl von 1 bis 10, mit der Maßgabe, dass o = 2 oder 3 und/oder p = 2, wenn q = 1;
- R⁹: mindestens einbindiger, vorzugsweise mindestens zweibindiger und insbesondere mindestens dreibindiger, inerter, organischer Rest mit der Maßgabe dass o = 2 oder 3 und/oder p = 2, wenn R⁹= einbindiger, organischer Rest;
- R¹⁰: in der ersten Alternative = Gruppe -NH-, mit der Maßgabe, dass
(i) die Gruppen R¹² über die durch die linken äußeren Ergänzungsstriche symbolisierten kovalenten Bindungen mit dem Kohlenstoffatom der Gruppe R" verknüpft sind und durch die durch die rechten äußeren Ergänzungsstriche, durch "<" oder durch "=" symbotisierten kovalenten Bindungen mit den Resten R¹⁴ oder R¹⁴ und R¹³ verknüpft sind;
   oder
   in der zweiten Alternative = Gruppen R¹², mit den Maßgaben, dass
(ii) die mit R¹⁴ direkt verknüpfte Gruppe R¹² -NH- und
(iii) die Gruppen R¹² über die durch die linken äußeren Ergänzungsstriche symbolisierten kovalenten Bindungen mit dem Kohlenstoffatom der Gruppe R¹¹ verknüpft sind und durch die durch die rechten äußeren Ergänzungsstriche, durch "<" oder durch "=" symbolisierten kovalenten Bindungen mit den Resten R⁹ verknüpft sind;
- R¹¹: Gruppe -C(=R⁸)-, worin "=R⁸" die vorstehend angegebene Bedeutung hat;,
- R¹²: zweibindiges oder dreibindiges Atom, ausgewählt aus der Gruppe, bestehend aus zweibindigen, verküpfenden Atomen R⁷ und dreibindigen Stickstoffatomen -N< und - N=, worin "=" eine Doppelbindung symbolisiert; oder
zweibindige oder dreibindige, verküpfende, funktionelle Gruppe, ausgewählt aus der Gruppe, bestehend aus -NH-, -N(-R⁶)- -NH-C(=R⁸)-, -NH[-C(=R⁸)-]₂, -NH-C(=R⁸)-NH-, -NH-C(=R⁸)-R⁷-, -NH-C(=R⁸)-NH-C(=R⁸)-R⁷-, -R⁷-N=, - R⁷-NH-C(=R⁸)- und -NH-C(=R⁸)-NH-N=C<, worin "=R⁸", R⁷ und R⁶ die vorstehend angegebene Bedeutung haben;
- R¹³: einbindiger, inerter, organischer Rest R⁶ oder Gruppe der allgemeinen Formel VIII:

**-R¹⁴(-R¹⁵)ₒ** (VIII),

worin der Index o die vorstehend angegebene Bedeutung hat und die Reste R¹⁴ und R¹⁵ die nachstehend angegebene Bedeutung haben;
- R¹⁴: mindestens zweibindiger, inerter, organischer Rest;
- R¹⁵: Silangruppe der allgemeinen Formel V.

Vorzugsweise werden die mindestens einbindigen Reste R⁹ aus der Gruppe, bestehend aus
- mindestens einbindigem, substituiertem und unsubstituiertem Alkyl vorzugsweise mit 1 bis 20, bevorzugt 2 bis 16 und insbesondere 2 bis 10 Kohlenstoffatomen, Cycloalkyl- vorzugsweise mit 3 bis 20, bevorzugt 3 bis 16 und insbesondere 3 bis 10 Kohlenstoffatomen und Aryl- vorzugsweise mit 5 bis 20, bevorzugt 6 bis 14 und insbesondere 6 bis 10 Kohlenstoffatomen;
- mindestens einbindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- mindestens einbindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom;
wobei die vorstehend beschriebenen Substituenten in Betracht kommen, ausgewählt.

Vorzugsweise ist der Rest R¹⁰ eine -NH-Gruppe (= erste Alternative).

Vorzugsweise ist der Rest R¹¹ eine -C(=O)-Gruppe.

Vorzugsweise werden die Reste R¹² aus der Gruppe, bestehend aus dreibindigen Stickstoffatomen -N< und zweibindigen, verküpfenden, funktionellen Gruppen -N(-R⁶)-, worin die Variable R⁶ die vorstehend angegebene Bedeutung, bevorzugt Methyl, Ethyl, Propyl, Isopropyl, n-Butyl, Isobutyl, sec.-Butyl und tert.- Butyl, insbesondere n-Butyl, hat, ausgewählt.

Bevorzugt sind die Reste R¹² über die durch die linken äußeren Ergänzungsstriche symbolisierten kovalenten Bindungen mit dem Kohlenstoffatom der Gruppe R¹¹ verknüpft und durch die durch die rechten äußeren Ergänzungsstriche oder durch "<" symbolisierten kovalenten Bindungen mit den Resten R¹⁴ oder R¹⁴ und R¹³ verknüpft (= erste Alternative).

Vorzugsweise werden die mindestens zweibindigen, insbesondere zweibindigen, Reste R¹⁴ aus der Gruppe, bestehend aus
- mindestens zweibindigem, substituiertem und unsubstituiertem Alkyl vorzugsweise mit 1 bis 20, bevorzugt 2 bis 16 und insbesondere 2 bis 10 Kohlenstoffatomen, Cycloalkyl- vorzugsweise mit 3 bis 20, bevorzugt 3 bis 16 und insbesondere 3 bis 10 Kohlenstoffatomen und Aryl- vorzugsweise mit 5 bis 20, bevorzugt 6 bis 14 und insbesondere 6 bis 10 Kohlenstoffatomen;
- mindestens zweibindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- mindestens zweibindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere `Sauerstoffatom, Schwefelatom und Stickstoffatom;
wobei die vorstehend beschriebenen Substituenten in Betracht kommen, ausgewählt. Insbesondere wird Propan-1,3-diyl verwendet.

Die vorstehend beschriebenen Verbindungen (B) können nach den üblichen und bekannten Verfahren der siliziumorganischen Chemie hergestellt werden.

Vorzugsweise sind sie herstellbar, indem man
(a) in einer ersten Alternative mindestens eine Verbindung der allgemeinen Formel IX:

   **R⁹(-N=C=R⁸)_{q}** (IX),

   worin der Index q und die Variable R⁹ die vorstehend angegebene Bedeutung haben und R⁸ für ein Sauerstoffatom oder ein Schwefelatom steht, mit mindestens einer Verbindung der allgemeinen Formel X:

   **H-R¹²[-R**¹³**]ₙ[-R¹⁴(-R¹⁵)ₒ]ₚ** (X),

   worin die Indizes und die Variablen die vorstehend angegebene Bedeutung haben, umsetzt
   oder
(b) in einer zweiten Alternative mindestens eine Verbindung der allgemeinen Formel XI:

   **R⁹(-R¹²-H)_{q}** (XI),

   worin der Index und die Variablen die vorstehend angegebene Bedeutung haben, mit mindestens einer Verbindung der allgemeinen Formel XII:

   **R⁸=C=N-R¹⁴(-R¹⁵)ₒ** (XII),
worin der Index und die Variablen die vorstehend angegebene Bedeutung haben, umsetzt.

Vorzugsweise wird die erste Alternative (a) angewandt.

Vorzugsweise wird bei den beiden Alternativen (a) und (b) ein Äquivalentverhältnis der komplementären, reaktiven, funktionellen Gruppen

**-N=C=R⁸ : -R¹²-H**

nahe 1, bevorzugt 1,5 : 1 bis 1 : 1,5, besonders bevorzugt 1,3 : 1 bis 1 : 1,3 und insbesondere 1,2 : 1 bis 1 : 1,2 angewandt.

Beispiele geeigneter Verbindungen der allgemeinen Formel X sind
- Monoisocyanate, wie Ethyl-, Propyl-, Butyl-, Pentyl-, Hexyl -, Heptyl-, Octyl-, Nonyl-, Decyl-, Undecyl-, Lauryl-, Cyclohexyl- oder Phenylisocyanat;
- Diisocyanate, wie Tetramethylen-1,4-diisocyanat, Hexamethylen-1,6-düsocyanat, 2,2,4-Trimethylhexamethylen-1,6-diisocyanat, omega,omega'-Dipropyl-ätherdiisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanatomethyl)-benzol, 1,5-Di-methyl-2,4-di(isocyanatoethyl)-benzol, 1,3,5-Trimethyl-2,4-di(isocyanatomethyl)-benzol, 1,3,5- T riethyl-2 ,4-di(isocyanatomethyl)-benzol, Isophorondiisocyanat, Dicyclohexyldimethylmethan-4,4,'-düsocyanat, 2,4-Toluylendiisocyanat, 2,6-Toluylendiisocyanat, Diphenylmethan-4,4'-diisocyanat; und
- Polyisocyanate, wie Triisocyanate wie Nonantriisocyanat (NTI) sowie Polyisocyanate auf der Basis der vorstehend beschriebenen Diisocyanate und Triisocyanate, insbesondere Oligomere, die Isocyanurat-, Biuret-, Allophanat-, Iminooxadiazindion-, Urethan-, Carbodiimid-, Harnstoff- und/oder Uretdiongruppen enthalten, beispielsweise aus den Patentschriften und Patentanmeldungen CA 2,163,591 A 1, US 4,419,513 A, US 4,454,317 A, EP 0 646 608 A 1, US 4,801,675 A, EP 0 183 976 A1, DE 40 15 155 A 1, EP 0 303 150 A 1, EP 0 496 208 A 1, EP 0 524 500 A 1, EP 0 566 037 A 1, US 5,258,482 A, US 5,290,902 A, EP 0 649 806 A 1, DE 42 29 183 A 1 oder EP 0 531 820 A 1 bekannt sind und vorteilhafterweise eine NCO-Funktionalität von 2,0 - 5,0, vorzugsweise von 2,2 - 4,0, insbesondere von 2,5 - 3,8 haben;
- die hochviskosen Polyisocyanate, wie sie in der deutschen Patentanmeldung DE 198 28 935 A 1 beschrieben werden; sowie
- die aus der deutschen Patentanmeldung DE 199 24 170 A 1, Spalte 2, Zeile 6 bis 34, Spalte 4, Zeile 16, bis Spalte 6, Zeile 62, die aus den internationalen Patentanmeldungen WO 00/31194, Seite 11, Zeile 30, bis Seite 12, Zeile 26, und WO 00/37520, Seite 5, Zeile 4, bis Seite 6, Zeile 27, und die aus der europäischen Patentanmeldung EP 0 976 723 A2, Seite 12, Absatz [0128], bis Seite 22, Absatz [0284], bekannten Polyisocyanate.

Beispiele geeigneter Verbindungen der allgemeinen Formel XI sind N,N-Bis(3-trimethoxysilylpropan-1-yl)amin, N,N-Bis(3-triethoxysilylpropan-1-yl)amin, N-(3-trimethoxysilylpropan-1-yl)-N-n-butylamin oder N-(3-triethoxysilylpropan-1 -yl)-N-n-butylamin.

Beispiele geeigneter Verbindungen der allgemeinen Formel XII sind die üblichen und bekannten, aliphatischen, cycloaliphatischen, aromatischen, aliphatisch-cycloaliphatischen, aliphatisch-aromatischen oder aliphatisch-cycloaliphatisch-aromatischen, mindestens eine Hydroxylgruppe, mindestens eine Thiolgruppe und/oder mindestens eine primäre und/oder sekundäre Aminogruppe enthaltenden Alkohole, Thiole, Thioalkohole, Phenole, Amine, Aminoalkohole, Aminothiole oder Aminothioalkohole.

Beispiele für geeignete Verbindungen der allgemeinen Formel XIII sind 3-Trimethoxysilylpropan-1-yl-isocyanat oder 3-Triethoxysilylpropan-1 -yl-isocyanat.

Methodisch weist die Herstellung der Verbindungen (B) keine Besonderheiten auf, sondern erfolgt mit Hilfe der üblichen und bekannten Methoden und Vorrichtungen zur Handhabung und Umsetzung von Polyisocyanaten und organischen Siliciumverbindungen, wobei die üblichen und bekannten Vorsichtsmaßnahmen zur Handhabung von Polyisocyanaten getroffen werden.

Im Allgemeinen werden die Verbindungen der allgemeinen Formeln X und XI bzw. XIl und XIII so lange miteinander umgesetzt, bis in den betreffenden Reaktionsgemischen mit Hilfe der üblichen und bekannten Methoden für den qualitativen und quantitativen Nachweis von Isocyanatgruppen keine freien Isocyanatgruppen mehr nachweisbar sind.

Der Gehalt der erfindungsgemäß zu verwendenden härtbaren Gemische (A/B) an Phosphonsäurediestern und/oder Diphosphonsäurediestern (A) kann sehr breit variieren und richtet sich nach den Erfordernissen des Einzelfalls, sodass er an diese optimal angepasst werden kann. Vorzugsweise sind die Phosphonsäurediester und/oder Diphosphonsäurediester (A) in einem härtbaren Gemisch (A/B) in einer Menge von 1 bis 40 Gew.-% bevorzugt 2 bis 30 Gew.-% und insbesondere 3 bis 20 Gew.-%, jeweils bezogen auf den Festkörper des thermisch härtbaren Gemischs (A/B), enthalten.

Ebenso kann der Gehalt der erfindungsgemäß zu verwendenden härtbaren Gemische (A/B) an . Verbindungen (B) sehr breit variieren und den Erfordernissen des Einzelfalls optimal angepasst werden. Vorzugsweise sind die Verbindungen (B) in einem thermisch härtbaren Gemisch (A/B) in einer Menge von 60 bis 99 Gew.-%, bevorzugt 70 bis 98 Gew.-% und insbesondere 80 bis 97 Gew.-%, jeweils bezogen auf den Festkörper des thermisch härtbaren Gemischs (A/B), enthalten.

Dabei ist der Festkörper gleich der Summe aller Bestandteile eines härtbaren Gemischs (A/B), die nach der Entfernung der flüchtigen Bestandteile den nichtflüchtigen Rückstand bilden, beispielsweise ein gehärtetes Material.

Wegen ihrer hervorragenden haftvermittelnden Wirkung können die härtbaren Gemische (A/B) im Rahmen der erfindungsgemäßen Verwendung zur Verbesserung der Haftung zwischen den unterschiedlichsten Materialien eingesetzt werden. Mit besonderem Vorteil werden sie als Haftvermittler in den erfindungsgemäßen Verbunden, umfassend mindestens ein Substrat, mindestens eine Beschichtung, mindestens eine Klebschicht und mindestens eine Scheibe, verwendet.

Hier und im Folgenden wird unter »Scheibe« ein planares, im Wesentlichen planares, oder dreidimensional geformtes, optisch transparentes, d. h. vorzugsweise für sichtbares Licht durchlässiges, insbesondere klares, gegebenenfalls getöntes Formteil verstanden, das aus den unterschiedlichsten Materialien, insbesondere aus Kunststoff oder Glas, bestehen kann. Insbesondere handelt es sich bei den Formteilen um Verbundglasscheiben. Die Verbundglasscheiben werden insbesondere in den Fenstern von Fortbewegungsmitteln, vorzugsweise motorisierten Straßenfahrzeugen, bevorzugt PKW, verwendet.

Für die Herstellung der Klebschicht können die unterschiedlichsten Klebstoffe verwendet werden. Beispiele geeigneter Klebstoffe, ihre Anwendungsformen und die Methoden für ihre Aushärtung sind aus dem deutschen Patent DE 102 02 819 C1, Seite 5, Absätze [0058] und [0059], bekannt. Bevorzugt sind die Klebstoffe feuchtigkeitshärtend. Insbesondere enthalten die Klebstoffe Polyisocyanate.

Bei der Beschichtung handelt es sich vorzugsweise um eine Lackierung, die aus einer Schicht oder aus mindestens zwei Schichten besteht. Vorzugsweise ist die Lackierung eine Mehrschichtlackierung, insbesondere eine Mehrschichtlackierung, wie sie üblicherweise in der Automobilserienlackierung eingesetzt wird (vgl. hierzu auch die deutschen Patentanmeldungen DE 199 38 758 A1, Seite 10, Zeile 65, bis Seite 12, Zeile 51, und DE 199 48 004 A1, Seite 17, Zeile 37, bis Seite 19, Zeile 22).

Das Substrat kann aus einem beliebigen geeigneten Material bestehen. Vorzugsweise besteht das Substrat aus einem Material, ausgewählt aus der Gruppe, bestehend aus Metallen, Gläsern, Kunststoffen, natürlichen oder künstlichen Mineralien, Keramiken, Beton, Zement, Ton, Holz, Papier, Leder, Textil und Verbunden dieser Materialien, insbesondere. aus Metallen und Kunststoffen. Bevorzugt ist das Substrat eine Kraftfahrzeugkarosserie oder ein Teil hiervon.

Vorzugsweise liegt der erfindungsgemäß zu verwendende Haftvermittler in dem erfindungsgemäßen Verbund in der Beschichtung vor. Handelt es sich bei der Beschichtung um eine Mehrschichtlackierung, liegt der Haftvermittler vorzugsweise in der Schicht vor, die unmittelbar an die Klebschicht angrenzt.

Der erfindungsgemäße Verbund kann mit Hilfe üblicher und bekannter Verfahren hergestellt werden. Vorzugsweise wird er mit Hilfe des erfindungsgemäßen Verfahrens hergestellt, indem man
(I) einen thermisch härtbaren Beschichtungsstoff, enthaltend ein härtbares Gemisch (A/B) auf ein unbeschichtetes oder vorbeschichtetes Substrat appliziert, wodurch eine Schicht aus dem Beschichtungsstoff resultiert,
(II) die Schicht aus dem Beschichtungsstoff für sich alleine oder zusammen mit mindestens einer darunter befindlichen Schicht aus einem anderen Beschichtungsstoff härtet, wodurch eine Beschichtung resultiert, .
(III) auf die Beschichtung, in dem Bereich, in dem das Substrat mit der Scheibe über die Beschichtung und die Klebschicht verbunden werden soll, einen Klebstoff appliziert, wodurch die Klebstoffschicht resultiert, und
(IV) die Klebstoffschicht mit der Scheibe verbindet und aushärtet, wodurch die Klebschicht resultiert.

Beispiele geeigneter härtbaren Gemische (A/B), Substrate und Klebstoffe sind die vorstehend beschriebenen.

Vorzugsweise ist der Beschichtungsstoff ein konventioneller Beschichtungsstoff auf Basis organischer Lösemittel, ein wässriger Beschichtungsstoff, ein im Wesentlichen oder völlig wasserfreier und lösemittelfreier, flüssiger Beschichtungsstoff (100%-System) oder feinteiliger, feste Beschichtungsstoff (Pulverlack) oder eine wässrige Suspension feinteiliger; fester Partikel (Pulverslurry), vorzugsweise ein konventioneller Beschichtungsstoff auf Basis organischer Lösemittel, insbesondere ein konventioneller Beschichtungsstoff, der aus einem Mehrkomponentensystem, insbesondere Zweikomponentensystem, herstellbar ist. Vorzugsweise ist der Beschichtungsstoff ein Klarlack und die Beschichtung eine Klarlackierung. Beispiele geeigneter Beschichtungsstoffe dieser Art sowie die Methoden zur ihrer Applikation und Härtung sind aus dem deutschen Patent DE 102 02 819 C1, Seite 4, Absatz [0040], bis Seite 5, Absatz [0055], bekannt.

Vorzugsweise werden die Schichten aus den anderen Beschichtungsstoffen aus der Gruppe, bestehend aus Primer, Elektrotauchlackschichten, Füllerschichten Basislackschichten, bevorzugt Primer, Elektrotauchlackschichten, Füllerschichten Basislackschichten, wie sie üblicherweise für die Herstellung von mehrschichtige Automobilserienlackierungen verwendet werden, ausgewählt.

Vorzugsweise werden die Beschichtungen, hergestellt aus Schichten aus den anderen Beschichtungsstoffen, aus der Gruppe, bestehend aus Primer, Elektrotauchlackierungen, Füllerlackierungen oder Steinschlagschutzgrundierungen sowie Basislackierungen, ausgewählt.

Für die erfindungsgemäßen Verwendung und das erfindungsgemäße Verfahren ist es von ganz besonderem Vorteil, wenn dabei ein erfindungsgemäßes Gemisch, insbesondere ein erfindungsgemäßer Klarlack, eingesetzt wird.

Das erfindungsgemäße Gemisch enthält eines der vorstehend beschriebenen härtbaren Gemische (A/B) und mindestens einen thermisch härtbaren Polyester (C).

Vorzugsweise ist der thermisch härtbare Polyester (C) hydrophob (vgl. Römpp Lexikon Lacke und Druckfarben, Georg Thieme Verlag, Stuttgart, New York, 1998, »Hydrophobie«) und enthält Hydroxylgruppen als reaktive funktionelle Gruppen für die thermische Härtung.

Die Polyester (C) sind übliche und bekannte Verbindungen und können durch die üblichen und bekannten Polykondensationsverfahren aus den üblicherweise eingesetzten Ausgangsprodukten hergestellt werden. Beispiele geeigneter Ausgangsprodukte sind aus der deutschen Patentanmeldung DE 199 48 004 A1, Seite 5, Zeile 11, bis Seite 6, Zeile 21, bekannt.

Außerdem können die erfindungsgemäßen Gemische noch mindestens einen Zusatzstoff (D), der von den vorstehend beschriebenen Bestandteilen (A), (B) und (C) verschieden ist, enthalten.

Vorzugsweise wird der Zusatzstoff (D) aus der Gruppe, bestehend aus reaktionsfähigen und inerten, oligomeren und polymeren, filmbildenden Bindemitteln; Vernetzungsmitteln; reaktionsfähigen und inerten, organischen und anorganischen Lösemitteln; mit aktinischer Strahlung, insbesondere UV-Strahlung, aktivierbaren Verbindungen; organischen und anorganischen, farbigen und unbunten, optisch effektgebenden, elektrisch leitfähigen, magnetisch abschirmenden und fluoreszierenden Pigmenten; transparenten und opaken, organischen und anorganischen Füllstoffen; Nanopartikeln; Stabilisatoren; UV-Absorbern; Lichtschutzmitteln; Radikalfängern; Photoinitiatoren; Initiatoren der radikalischen Polymerisation; Trockenstoffen; Entlüftungsmitteln; Slipadditiven; Polymerisationsinhibitoren; Entschäumern; Emulgatoren und Netzmitteln; Haftvermittlern; Verlaufmitteln; Filmbildehilfsmitteln; rheologiesteuemden Additiven und Flammschutzmitteln, ausgewählt.

Bevorzugt wird der Zusatzstoff (D) aus der Gruppe, bestehend aus thermisch härtbaren, oligomeren und polymeren, filmbildenden Bindemitteln und Vernetzungsmitteln, ausgewählt.

Der Festkörpergehalt der erfindungsgemäßen Gemische kann sehr breit variieren und daher den Erfordernissen des Einzelfalls optimal angepasst werden. Der Festkörpergehalt kann bei 100 Gew.-% liegen, d. h., das erfindungsgemäße Gemisch enthält keine flüchtigen Bestandteile, die bei der thermischen Härtung entweichen. Sind solche flüchtigen Bestandteile vorhanden; liegt der Festkörpergehalt, jeweils bezogen auf das erfindungsgemäße Gemisch, vorzugsweise bei 20 bis 80 Gew.-%, bevorzugt 25 bis 70 Gew.-% und insbesondere 30 bis 65 Gew.-%.

Der Gehalt des erfindungsgemäßen Gemischs an dem härtbaren Gemisch (AlB) kann breit variieren und deshalb hervorragend den Erfordernissen des Einzelfalls angepasst werden. Vorzugsweise enthält das erfindungsgemäße Gemisch 0,1 bis 10 Gew.-%, insbesondere 0,5 bis 8 Gew.-%, jeweils bezogen auf den Festkörper des erfindungsgemäßen Gemischs, an dem härtbaren Gemische (A/B).

Auch der Gehalt des erfindungsgemäßen Gemischs an dem Polyester (C) kann breit variieren und daher ebenfalls hervorragend den Erfordernissen des Einzelfalls angepasst werden. Vorzugsweise enthält das erfindungsgemäße Gemisch 1 bis 40 Gew.%, insbesondere 2 bis 30 Gew.-%, jeweils bezogen auf den Festkörper des erfindungsgemäßen Gemischs, an Polyester (C).

Vorzugsweise sind die erfindungsgemäßen Gemische wasserfrei. Dies bedeutet, dass sie allerhöchstens Spuren von Wasser enthalten, die bei ihrer Herstellung über die Bestandteile und/oder bei ihrer Herstellung und/oder Handhabung über die Luftfeuchtigkeit unbeabsichtigt eingetragen werden. Bevorzugt liegt der Wassergehalt unterhalb der Nachweisgrenzen der üblichen und bekannten, qualitativen und quantitativen Methoden der Wasserbestimmung.

Methodisch weist die Herstellung der erfindungsgemäßen Gemische keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluss von aktinischer Strahlung.

Die erfindungsgemäßen Gemische können wegen ihrer hervorragenden anwendungstechnischen Eigenschaften zahlreichen Verwendungszwecken, wie der Herstellung von Beschichtungen, Klebschichten, Dichtungen, Formteilen und Folien, dienen. Insbesondere werden sie im Rahmen des erfindungsgemäßen Verfahrens für die Herstellung von Klarlackierungen von Mehrschichtlackierungen verwendet.

Zur Herstellung der erfindungsgemäßen Klarlackierungen werden die erfindungsgemäßen Gemische auf die vorstehend beschriebenen Substrate appliziert.

Methodisch weist die Applikation der erfindungsgemäßen Gemische keine Besonderheiten auf, sondern kann durch alle üblichen und bekannten, für das jeweilige erfindungsgemäße Gemisch geeigneten Applikationsmethoden, wie z.B. Extrudieren, Elektrotauchlackieren, Spritzen, Sprühen, inklusive Pulversprühen, Rakeln, Streichen, Gießen, Tauchen, Träufeln oder Walzen erfolgen. Vorzugsweise werden Extrusions- und Spritzapplikationsmethoden, insbesondere Spritzapplikationsmethoden, angewandt.

Nach ihrer Applikation werden die erfindungsgemäßen Gemische in üblicher und bekannter Weise thermisch gehärtet.

Die thermische Härtung erfolgt im Allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung von Schichten aus den erfindungsgemäßen Gemischen und zum Verdunsten von flüchtigen Bestandteilen wie gegebenenfalls vorhandenem Lösemittel. Die Ablüftung kann durch eine erhöhte Temperatur, die zu einer Härtung noch nicht ausreicht, und/oder durch eine reduzierte Luftfeuchtigkeit beschleunigt werden.

Die thermische Härtung erfolgt beispielsweise mit Hilfe eines gasförmigen, flüssigen und/oder festen, heißen Mediums, wie heiße Luft, erhitztes öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Die Härtung kann auch stufenweise erfolgen. Vorzugsweise erfolgt die thermische Härtung bei Temperaturen von Raumtemperatur bis 200°C, bevorzugt von Raumtemperatur bis 180°C und insbesondere von Raumtemperatur bis 160°C.

Die thermische Härtung kann noch durch zusätzliche Härtungsmethoden unterstützt werden, wozu gegebenenfalls die üblichen und bekannten Vorrichtungen, beispielsweise zur Härtung mit aktinischer Strahlung, insbesondere UV Strahlung, verwendet werden.

Der erfindungsgemäße Verbund, insbesondere der erfindungsgemäße Verbund, der mit Hilfe des erfindungsgemäßen Verfahrens hergestellt wird, speziell der erfindungsgemäße Verbund, der mit Hilfe des erfindungsgemäßen Verfahrens unter Verwendung des erfindungsgemäßen Gemischs hergestellt wird, weist zahlreiche Vorteile auf. So sind seine anwendungstechnischen Eigenschaften weitgehend unabhängig von den bei seiner Herstellung herrschenden Bedingungen, insbesondere was Temperatur und Luftfeuchtigkeit betrifft. Er ist auch unter extremen Bedingungen auf Dauer fest und erleidet keine Beschädigungen, wie Risse oder Ablösungen. Vor allem ist der erfindungsgemäße Verbund auch bei hohen und niederen Temperaturen, hoher und niedriger Luftfeuchtigkeit sowie unter rasch zwischen diesen Extremen wechselnden Bedingungen, wie sie im Tropenklima und im Wüstenklima herrschen, bei hoher Strahlungsintensität und bei intensiver mechanischer und chemischer Belastung stabil und erleidet keine Beschädigung. Er ist daher in besonderem Maße als Bestandteil von Kraftfahrzeugkarosserien, insbesondere von Karosserien von Nutzfährzeugen und PKW, geeignet. Wegen seiner besonders hohen Qualität ist er vor allem als Bestandteil von PKW der Oberklasse geeignet.

### Beispiele und Vergleichsversuch

### Herstellbeispiel 1

### Die Herstellung der Verbindung (B1)

In einem Reaktionsgefäß, ausgerüstet mit Rührer, Rückflusskühler, Ölheizung und Stickstoffeinleitungsrohr, wurden 456,38 Gewichtsteile eines handelsüblichen Polyisocyanats (Basonat® HI 100 der Firma BASF Aktiengesellschaft) und 228 Gewichtsteile eines handelsüblichen aromatischen Lösemittelgemischs (Solventnaphta®) vorgelegt. Zu dieser Mischung wurden unter Rühren langsam 815,62 Gewichtsteile N,N-Bis(3-trimethoxysilylpropan-1-yl)amin (Dynasilan® 1124 der Firma Degussa) hinzu gegeben. Anschließend wurde das Reaktionsgemisch während zwei Stunden unter Rühren auf 50°C erhitzt. Hiernach waren IR-spektroskopisch keine freien Isocyanatgruppen mehr nachweisbar. Die Lösung der Verbindung (B1) wies einen Festkörpergehalt von 84 bis 85 Gew.-% auf.

### Herstellbeispiel 2

### Die Herstellung der Verbindung (B2)

In einem Reaktionsgefäß, ausgerüstet mit Rührer, Rückflusskühler, Ölheizung und Stickstoffeinleitungsrohr, wurden 82 Gewichtsteile eines handelsüblichen Polyisocyanats (Vestanat® T 1890 der Firma Degussa) und 82 Gewichtsteile eines handelsüblichen aromatischen Lösemittelgemischs (Solventnaphta®) vorgelegt. Zu dieser Mischung wurden unter Rühren langsam 86 Gewichtsteile N-(3-Trimethoxysilylpropan-1-yl)-N-n-butylamin (Dynasilan® 1189 der Firma Degussa) hinzu gegeben. Anschließend wurde das Reaktionsgemisch während zwei Stunden unter Rühren auf 50°C erhitzt. Hiernach waren IR-spektroskopisch keine freien Isocyanatgruppen mehr nachweisbar. Die Lösung der Verbindung (B2) wies einen Festkörpergehalt von 52 bis 53 Gew.-% auf.

### Herstellbeispiel 3

### Die Herstellung des härtbaren Gemischs (A/B/1) (Haftvermittler 1)

92 Gewichtsteile der Verbindung B2 gemäß Herstellbeispiel 2 wurden mit 2 Gewichtsteilen Dimethylphosphit vermischt, wonach man die resultierende Mischung während 10 min bei Raumtemperatur homogenisierte.

### Herstellbeispiel 4

### Die Herstellung des härtbaren Gemischs (A/B/2) (Haftvermittler 2)

92 Gewichtsteile der Verbindung B1 gemäß Herstellbeispiel 1, 45 Gewichtsteile der Verbindung B2 gemäß Herstellbeispiel 2, 57 Gewichtsteile Solventnaphtha®, 6 Gewichtsteile Propylenglykol und 8 Gewichtsteile Diphenylphosphit wurden miteinander vermischt, wonach man die resultierende Mischung während 10 min bei Raumtemperatur homogenisierte.

### Herstellbeispiel 5

### Die Herstellung eines hydroxyfunktionellen Methacrylatcopolymerisats (D)

In einem mit Stickstoff gespülten Druckreaktor, der mit einem Rückflusskühler und Rührer ausgerüstet war, wurde mit Stickstoff ein Überdruck von 2,5 bar eingestellt. Anschließend wurde der Reaktor mit 28,238 Gewichtsteilen Solventnaphtha® befüllt. Das Lösemittel wurde unter Rühren auf 150°C erhitzt. Bei dieser Temperatur wurde eine Mischung aus 3,476 Gewichtsteilen Solventnaphtha® und 1,023 Gewichtsteilen Peroxid DTBP gleichmäßig während 285 Minuten zudosiert. 15 min nach Beginn dieses Zulaufs wurde eine Mischung aus 5,114 Gewichtsteilen Styrol, 17,378 Gewichtsteilen tert.-Butylacrylat, 20,446 Gewichtsteilen 2-Hydroxypropylmethacrylat, 7,815 Gewichtsteilen n-Butylmethacrylat und 0,375 Gewichtsteilen Acrylsäure während 240 min zudosiert. Nach der Beendigung des Initiatorzulaufs wurde das Reaktionsgemisch während 120 min bei 150°C nachpolymerisiert. Anschließend wurde das Reaktionsgemisch auf 120°C abgekühlt und mit Stickstoff belüftet. Bei dieser Temperatur wurde nachpolymerisiert bis ein Festkörpergehalt > 59 Gew.-% erreicht war (Bestimmung: 1 Stunde bei 130°C). Danach wurde die Lösung des 1 hydroxyfunktionellen Methacrylatcopolymerisats (D) auf Raumtemperatur abgekühlt..

### Herstellbeispiel 6

### Die Herstellung eines hydroxyfunktionellen, hydrophoben Polyesters (C)

In einen mit Stickstoff befüllten Reaktor, ausgerüstet mit einem Rührer und einer Füllkörperkolonne mit Kopftemperaturmessung und Wasserabscheider, wurden 22,6 Gewichtsteile Hexahydrophthalsäureanhydrid, 15,99 Gewichtsteile Pentaerythrit, 9,41 Gewichtsteile Ethylbutylpropan-1,3-diol, 18,56 Gewichtsteile Isononansäure und 0,8 Gewichtsteile Cyclohexan in der angegebenen Reihenfolge gegeben. In die Trennvorlage wurde eine ausreichende Menge Cyclohexan gegeben. Anschließend wurde das Reaktionsgemisch erhitzt, sodass die Temperatur im Reaktor 220°C und am Kolonnenkopf 85°C nicht überstieg. Bei diesen Temparaturen wurde das Reaktionsgemisch so lange gerührt, bis eine Säurezahl von 17 mg KOH/g erreicht war. Anschließend wurde der resultierende hydroxyfunktionelle, hydrophobe Polyester (C) mit 22 Gewichtsteilen Solventnaphtha® angelöst.

### Herstellbeispiel 7

### Die Herstellung eines Rheologiehilfsmittels (D)

In einem mit Stickstoff gespülten Druckreaktor, der mit einem Rückflusskühler und Rührer ausgerüstet war, wurde mit Stickstoff ein Überdruck von 2,5 bar eingestellt. Anschließend wurde der Reaktor mit 28Gewichtsteilen Solventnaphtha® befüllt. Das Lösemittel wurde unter Rühren auf 160°C erhitzt. Bei dieser Temperatur wurde eine Mischung aus 4,02 Gewichtsteilen Solventnaphtha® und 1,16 Gewichtsteilen Peroxid DTBP gleichmäßig während 4,75 Stunden zudosiert. 15 min nach Beginn dieses Zulaufs wurde eine Mischung aus 25,67 Gewichtsteilen Styrol, 22,3 Gewichtsteilen n-Butylacrylat, 13,87 Gewichtsteilen 2-Hydroxypropylmethacrylat, 1,41 Gewichtsteilen Methacrylsäure und 0,87 Gewichtsteilen Laurylmethacrylat während 4 Stunden zudosiert. Nach der Beendigung des Initiatorzulaufs wurde das Reaktionsgemisch während 120 min bei 160°C nachpolymerisiert. Anschließend wurde das Reaktionsgemisch auf Raumtemperatur abgekühlt und mit Stickstoff belüftet.

84,7 Gewichtsteile der Methacrylatcopolymerisatlösung wurden mit 5,88 Gewichtsteilen Butylacetat versetzt. Die resultierende Lösung wurde in einen Reaktor gegeben und unter Rühren mit 2,24 Gewichtsteilen Benzylamin versetzt. Anschließend wurde eine Mischung aus 1,76 Gewichtsteilen Hexamethylendiisocyanat und 3,42 Gewichtsteilen Butylacetat während 5 min zudosiert, sodass die Temperatur des Reaktionsgemischs 40°C nicht überschritt. Das resultierende Rheologiehilfsmittel (D) wies eine Festkörpergehalt von 59 Gew.-% und eine Viskosität bei 23°C von 800 mPas auf.

### Beispiele 1 und 2

### Die Herstellung der Klarlacke 1 (Beispiel 1) und 2 (Beispiel 2) und der Mehrschichtlackierungen 1 (Beispiel 1) und 2 (Beispiel 2)

Es wurden zunächst die Stammlacke 1 (Beispiel 1) und 2 (Beispiel 2) durch Vermischen der in der Tabelle 1 aufgeführten Bestandteile und Homogeniseren der resultierenden Mischungen hergestellt.

**Tabelle 1. Die Zusammensetzung der Stammlacke 1 (Beispiel 1) und 2 (Beispiel 2)**

| **Bestandteil** | **Stammlack (Gewichtsteile)** | |
|---|---|---|
| | **1** | **2** |
| Methacrylatcopolymerisat (D) gemäß Herstellbeispiel 5 | 32,2 | 32,2 |
| Polyester (C) gemäß Herstellbeispiel 6 | 27,5 | 27,5 |
| Rheologiehilfsmittel (D) (Setalux® C 91756 VS-60 YA der Firma Nuplex Resins) | 8,3 | 8,3 |
| Rheologiehilfsmittel (D) gemäß Herstellbeispiel 7 | 9,3 | 9,3 |
| Butylgylkolacetat | 9 | 9 |
| Solventnaphtha® | 1 | 1 |
| Methylamylketon | 1,5 | 1,5 |
| Tinuvin® 5248 (Lichtschutzmittel D der Firma Ciba Specialty Chemicals) | 2,1 | 2,1 |
| Byk® 325 (Lackadditiv D der Firma Altana) | 0,1 | 0,1 |
| Butanol | 0,5 | 0,5 |
| Ethoxypropylacetat | 3,4 | 3,4 |
| Butylacetat | 4,3 | 4,3 |
| Haftvermittler 2 gemäß Herstellbeispiel 4 | 2,5 | - |
| Haftvermittler 1 gemäß Herstellbeispiel 3 | - | 2,5 |

Unmittelbar vor ihrer Applikation wurden die Klarlacke 1 (Beispiel 1) oder 2 (Beispiel 2) durch Vermischen von jeweils 100 Gewichtsteilen der Stammlacke 1 oder 2 mit jeweils 33 Gewichtsteilen einer Härterlösung, bestehend aus 89,6 Gew.-% eines handelsüblichen Polyisocyanats (Basonat® HI 190 der Firma BASF Aktiengesellschaft), 5,2 Gew.-% Butylacetat und 5,2 Gew.-% Solventnaphtha®, und Homogenisieren der resultierenden Gemische hergestellt.

Die Klarlacke 1 und 2 wurden auf Prüfbleche appliziert, die jeweils mit einer üblichen und bekannten, kathodisch abgeschiedenen und thermisch gehärteten Elektrotauchlackierung, einer üblichen und bekannten, thermisch gehärteten Füllerlackierung und einer während 10 min bei 80°C vorgetrockneten Schicht aus einem handelsüblichen schwarzen Wasserbasislack der Firma BASF Coatings AG beschichtet worden waren, appliziert. Die Basislackschichten und die Klarlackschichten wurden jeweils gemeinsam gehärtet. Dabei wurden die folgenden Bedingungen angewandt:
Serie 1: 20 min bei 140°C und 2 Wochen Alterung;
Serie 2: Dreimal 20 min bei 140°C (= Überbrennung) und 2 Wochen Alterung;
Serie 3: 30 min bei 160°C (= Überbrennung) und 2 Wochen Alterung.

Die resultierenden Basislackierungen wiesen jeweils eine Schichtdicke von 7,5 µm und die Klarlackierungen eine Schichtdicke von 40 µm auf. Die resultierenden Mehrschichtlackierungen 1 (Beispiel 1) und 2 (Beispiel 2) waren hoch glänzend und wiesen einen hervorragenden optischen Gesamteindruck (Appearance) auf.

Durch die Überbrennung (Serien 2 und 3) wurden aber die Klarlackierungen gewissermaßen "totgebrannt", so dass zu befürchten war, dass sich die Haftung zu darauf befindlichen Klebschichten signifikant verschlechterte.

Die Scheibenverklebungshaftung wurde wie folgt bestimmt.

Es wurden auf allen Prüftafeln quer über die Schmalseite Klebstreifen angebracht.

Auf zwei Poylethylenfolien-Unterlagen pro Prüfblech wurden mit einer Dreiecksdüse ein handelsüblicher Scheibenklebstoff (EFTEC DA 300 der Firma EFTEC, Schweiz) in einer Breite von 10 mm und einer Länge von 150 mm raupenförmig aufgetragen. Man ließ die Raupen während einer Minute unter Normalklimabedingungen antrocknen. Anschließend wurden die Raupen auf die Prüfbleche übertragen. Dabei wurde jeweils Ende einer Raupe auf den Klebstreifen gelegt, sodass nach der Härtung die Raupen leicht mit einer Spitzzange zu fassen waren und zur Durchführung der Schälhaftungsprüfung abgezogen werden konnten. Nach dem Aufbringen der Raupen wurden beidseitig der Raupen Abstandshalter aufgelegt. Auf die Polyethylenfolien-Rückseiten und die Abstandshalter wurden Bondertafeln aufgelegt. Durch manuelles Anpressen wurden die Raupen auf eine Schichtdicke von 5 mm eingestellt. Die Polyethylenfolien und die Bondertafeln verblieben während sieben Tage bei 23°C und 50% relativer Luftfeuchtigkeit im Normklimaraum zur Aushärtung. Nach sieben Tage wurden die Polyethylenfolien und die Bondertafeln entfernt. Die ausgehärteten Raupen wurden "am Kopf", d. h., dort wo sie auf den Klebstreifen auflagen mit einer Spitzzange erfasst und in einem Winkel von 90° von der Haftfläche abgezogen. Nach jeweils 10 mm Abzugslänge wurde das Material in der Bruchzone mit einem Messer bis auf die Oberfläche der Klarlackierungen angeschnitten und danach weiter abgezogen.

Die Trennflächen wurden visuell beurteilt. Dabei ist es maßgebend, dass möglichst ein vollständiger kohäsiver Bruch in der Raupe auftrat, entsprechend einer möglichst vollständigen Haftung der Raupe auf der Mehrschichtlackierung. Die Haftung wurde wie folgt benotet:

| Haftung | Note |
|---|---|
| 100% | 5 |
| 75% | 4 |
| 50% | 3 |
| 25% | 2 |
| 0% | 1 |

Es zeigte sich, dass bei den Mehrschichtlackierungen 1 und 2 der Beispiele 1 und 2 aller Serien 1 bis 3 die Note 5 erreicht wurde, was die hervorragende haftvermittelnde Wirkung der Haftvermittler 1 und 2 der Herstellbeispiele 3 und 4 untermauerte.

### Vergleichsversuch V1

### Die Herstellung des Klarlacks V1 und der Mehrschichtlackierung V1

Das Beispiel 1 wurde wiederholt, wobei statt des Haftvermittlers gemäß dem Herstellbeispiel 4 die gleiche Menge des silanisierten Polyisocyanats des Herstellbeispiels 2 (= Verbindung B2) ohne weitere Zusätze an Diphenylphosphit eingesetzt wurde. Bei den Tests zur Scheiberiverklebung zeigte sich nach Überbrennung (3 x 20 min bei 140°C sowie 30 min bei 160°C) und anschließender Alterung über 2 Wochen eine Note von jeweils 3, während die entsprechenden Ergebnisse der Formulierungen auf der Basis der Stammlacke 1 und 2 wie beschrieben mit 5 bewertet wurden. Dies untermauerte den überraschend hohen Einfluss des Diphenylphosphits auf die Scheibenverklebung.

## Patentansprüche

1. Verwendung von härtbaren Gemischen (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen,
als Haftvermittler, **dadurch gekennzeichnet, dass** die Haftvermittler in Verbunden, umfassend mindestens ein Substrat, mindestens eine Beschichtung, mindestens eine Klebschicht und mindestens eine Scheibe, verwendet werden, wobei die Haftvermittler in der mindestens einen Beschichtung vorliegen, und die Scheibe aus der Gruppe, bestehend aus planaren, im Wesentlichen planaren, und dreidimensional geformten, optisch transparenten Formtellen ausgewählt wird.

2. Verwendung nach Anspruch 1, **dadurch gekennzeichnet, dass** die Haftvermittler In der Beschichtung vorliegen, auf deren Oberfläche sich die Klebschicht befindet.

3. Verwendung nach einem der Ansprüche 1 oder 2 , **dadurch gekennzeichnet, dass** die Phosphonsäurediester und die Diphosphonsäurediester (A) aus der Gruppe, bestehend aus acyclischen Phosphonsäurediestern, cyclischen Phosphonsäurediestem, acyclischen Diphosphonsäurediestem, cyclischen Diphosphonsäurediestern und cyclisch-acyclischen Diphosphonsäurediestern, ausgewählt werden.

4. Verwendung nach einem der Ansprüche 1 bis 3, **dadurch gekennzeichnet, dass** die kondensierbare Silangruppe der Verbindung (B) die allgemeine Formel V hat:
-SIR³ₘR⁶₃₋ₘ (V),
worin der Index und die Variablen die folgende Bedeutung haben:
m ganze Zahl von 1 bis 3;
R⁵ einbindiges, kondensierbares Atom oder einbindiger, kondensierbarer, organischer Rest;
R⁶ einbindiger, inerter, organischer Rest.

5. Verwendung nach Anspruch 4, **dadurch gekennzeichnet, dass** die Verbindungen (B) herstellbar sind, indem man
(a) in einer ersten Alternative mindestens eine Verbindung der allgemeinen Formel IX:
R⁹(N=C=R⁸)_{q} (IX),
worin der Index q für eine ganze Zahl von 1 bis 10, die Variable R⁹ für einen mindestens einbindigen, inerten, organischen Rest und R⁸ für ein Sauerstoffatom oder ein Schwefelatom steht, mit mindestens einer Verbindung der allgemeinen Formel X:
H-R¹²[-R¹³]ₙ[-R¹⁴(-R¹⁵)ₒ]ₚ (X),
worin
n 0 oder 1;
o 1, 2 oder 3;
p 1 oder 2;
mit der Maßgabe, dass o = 2 oder 3 und/oder p = 2, wenn q = 1;
und mit der Maßgabe, dass o = 2 oder 3 und/oder p = 2, wenn R⁹ = einbindiger, organischer Rest;
R¹² zweibindiges oder dreibindiges Atom, ausgewählt aus der Gruppe, bestehend aus zweibindigen, verknüpfenden Atomen R⁷ und dreibindigen Stickstoffatomen -N< und -N=, worin "=" eine Doppelbindung symbolisiert; oder
zweibindige oder dreibindige, verknüpfende, funktionelle Gruppe, ausgewählt aus der Gruppe, bestehend aus -NH-, -N(-R⁶)- -NH-C(=R⁸)-, -NH[-C(=R⁸)-]₂, -NH-C(=R⁸)-NH-, -NH-C(=R⁸)-R⁷, -NH-C(=R⁸)-NH- C(=R⁸)-R⁷, -R⁷-N=, - R⁷-NH-C(=R⁸)- und -NH-C(=R⁸)-NH-N=C<, worin "=R⁸", R⁷ und R⁶ die vorstehend angegebene Bedeutung haben;
R¹³ einbindiger, inerter, organischer Rest R⁶ oder Gruppe der allgemeinen Formel VIII:
-R¹⁴(-R¹⁵)ₒ (VIII),
worin der Index o die vorstehend angegebene Bedeutung hat und die Reste R¹⁴ und R¹⁵ die nachstehend angegebene Bedeutung haben;
R¹⁴ mindestens zweibindiger, inerter, organischer Rest;
R¹⁵ Silangruppe der allgemeinen Formel V
umsetzt oder
(b) in einer zweiten Alternative mindestens eine Verbindung der allgemeinen Formel XI:
R⁹(-R¹²-H)_{q} (XI),
worin der Index und die Variablen die vorstehend angegebene Bedeutung haben, mit mindestens einer Verbindung der allgemeinen Formel XII:
R⁸=C=N-R¹⁴(-R¹⁵)ₒ (XII),
worin der Index und die Variablen die vorstehend angegebene Bedeutung haben, umsetzt.

6. Verbunde, wie In einem der Ansprüche 1 oder 2 definiert, herstellbar unter Verwendung von einem härtbaren Gemisch (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen,
als Haftvermittler.

7. Verfahren zur Herstellung von Verbunden gemäß Anspruch 6, **dadurch gekennzeichnet, dass** man
(I) einen thermisch härtbaren Beschichtungsstoff, enthaltend ein härtbares Gemisch (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen, als Haftvermittler, auf ein unbeschichtetes oder vorbeschichtetes Substrat appliziert, wodurch eine Schicht aus dem Beschichtungsstoff resultiert,
(II) die Schicht aus dem Beschichtungsstoff für sich alleine oder zusammen mit mindestens einer darunter befindlichen Schicht aus einem anderen Beschichtungsstoff härtet, wodurch eine Beschichtung resultiert,
(III) auf die Beschichtung, in dem Bereich, in dem das Substrat mit der Scheibe über die Beschichtung und die Klebschicht verbunden werden soll, einen Klebstoff appliziert, wodurch die Klebstoffschicht resultiert, und
(IV) die Klebstoffschicht mit der Scheibe verbindet und aushärtet, wodurch die Klebeschicht resultiert.

8. Thermisch härtbare Gemische, enthaltend mindestens einen thermisch härtbaren Polyester (C) und ein härtbares Gemisch (A/B), enthaltend
(A) mindestens einen Phosphonsäurediester und/oder mindestens einen Diphosphonsäurediester und
(B) mindestens eine Verbindung, enthaltend mindestens zwei kondensierbare Silangruppen,
als Haftvermittler.

9. Thermisch härtbare Gemische gemäß Anspruch 8, **dadurch gekennzeichnet, dass** die Phosphonsäurediester und die Diphosphonsäurediester (A) aus der Gruppe, bestehend aus acyclischen Phosphonsäurediestern, cyclischen Phosphonsäurediestern, acyclischen Diphoaphonsäurediestern, cyclischen Diphosphonsäurediestern und cyclisch-acyclischen Diphosphonsäurediestern, ausgewählt werden.

10. Thermisch härtbare Gemische gemäß Anspruch 8, **dadurch gekennzeichnet, dass** die kondensierbaren Silangruppe der Verbindung (B) die allgemeine Formel V hat:
-SiR⁵ₘR⁵₃₋ₘ (V),
worin der Index und die Variablen die folgende Bedeutung haben:
m ganze Zahl von 1 bis 3;
R⁵ einbindiges, kondensierbares Atom oder einbindiger, kondensierbarer, organischer Rest;
R⁶ einbindiger, inerter, organischer Rest.

11. Thermisch härtbare Gemische gemäß Anspruch 10, **dadurch gekennzeichnet, dass** die Verbindungen (B) herstellbar sind, indem man
(a) in einer ersten Alternative mindestens eine Verbindung der allgemeinen Formel IX:
R⁹(N=C=R⁸)_{q} (IX),
worin der Index q für eine ganze Zahl von 1 bis 10, die Variable R⁹ für einen mindestens einbindigen, inerten, organischen Rest und R⁸ für ein Sauerstoffatom oder ein Schwafelatom steht, mit mindestens einer Verbindung der allgemeinen Formel X:
H-R¹²[-R¹³]ₙ[-R¹⁴(-R¹⁵)ₒ]ₚ (X),
worin
n 0 oder 1;
o 1, 2 oder 3;
p 1 oder 2;
mit der Maßgabe, dass o = 2 oder 3 und/oder p = 2, wenn q = 1;
und mit der Maßgabe, dass o = 2 oder 3 und/oder p = 2, wenn R⁹ = einbindiger, organischer Rest;
R¹² zweibindiges oder dreibindiges Atom, ausgewählt aus der Gruppe, bestehend aus zweibindigen, verknüpfenden Atomen R⁷ und dreibindigen Stickstoffatomen -N< und -N=, worin "=" eine Doppelbindung symbolisiert; oder
zweibindige oder dreibindige, verknüpfende, funktionelle Gruppe, ausgewählt aus der Gruppe, bestehend aus -NH-, -N(-R⁶)- -NH-C(=R⁸)- , -NH[-C(=R⁸)-]₂, -NH-C(=R⁸)-NH-, -NH-C(=R⁸)-R⁷-, -NH-C(=R⁸)-NH- C(=R¹)-R⁷-, -R⁷-N=, - R⁷-NH-C(=R⁸)- und -NH-C(=R⁸)-NH-N=C<, worin "=R⁸", R⁷ und R⁶ die vorstehend angegebene Bedeutung haben:
R¹³ einbindiger, inerter, organischer Rest R⁶ oder Gruppe der allgemeinen Formel VIII:
-R¹⁴(-R¹⁵)ₒ (VIII),
worin der Index o die vorstehend angegebene Bedeutung hat und die Reste R¹⁴ und R¹⁵ die nachstehend angegebene Bedeutung haben;
R¹⁴ mindestens zweibindiger, inerter, organischer Rest;
R¹⁵ Silangruppe der allgemeinen Formel V
umsetzt oder
(b) in einer zweiten Alternative mindestens eine Verbindung der allgemeinen Formel XI:
R⁹(-R¹²-H)_{q} (XI),
worin der Index und die Variablen die vorstehend angegebene Bedeutung haben, mit mindestens einer Verbindung der allgemeinen Formel XII:
R⁸=C=N-R¹⁴(-R¹⁵)ₒ (XII),
worin der Index und die Variablen die vorstehend angegebene Bedeutung haben, umsetzt.

## Claims

1. Use of curable mixtures (A/B) comprising
(A) at least one phosphonic diester and/or at least one diphosphonic diester and
(B) at least one compound containing at least two condensable silane groups,
as coupling agents, **characterized in that** the coupling agents are used in laminates comprising at least one substrate, at least one coating, at least one adhesive layer, and at least one sheet, the coupling agents being in the at least one coating, and the sheet being selected from the group consisting of planar, substantially planar, and three-dimensionally shaped, optically transparent moldings.

2. Use according to Claim 1, **characterized in that** the coupling agents are in the coating on whose surface the adhesive layer is located.

3. Use according to either of Claims 1 and 2, **characterized in that** the phosphonic diesters and the diphosphonic diesters (A) are selected from the group consisting of acyclic phosphonic diesters, cyclic phosphonic diesters, acyclic diphosphonic diesters, cyclic diphosphonic diesters, and cyclic-acyclic diphosphonic diesters.

4. Use according to any one of Claims 1 to 3, **characterized in that** the condensable silane group of the compound (B) has the general formula V:
**-SiR⁵ₘR⁶₃₋ₘ** (V),
in which the index and the variables have the following definitions:
m is an integer from 1 to 3;
R⁵ is a monovalent condensable atom or monovalent condensable organic radical; and
R⁶ is a monovalent inert organic radical.

5. Use according to Claim 4, **characterized in that** the compounds (B) are preparable by
(a) in a first alternative reacting at least one compound of the general formula IX:
**R⁹(N=C=R⁸)_{q}** (IX),
in which the index q is an integer from 1 to 10, the variable R⁹ is an at least monovalent inert organic radical and R⁸ is an oxygen atom or a sulfur atom, with at least one compound of the general formula X:
**H-R¹²[-R¹³]ₙ[-R¹⁴(-R¹⁵)ₒ]_{q}** (X),
in which
n is 0 or 1;
o is 1, 2 or 3;
p is 1 or 2;
with the proviso that o = 2 or 3 and/or p = 2 if q = 1;
and with the proviso that o = 2 or 3 and/or p = 2 if R⁹ = monovalent organic radical;
R¹² is a divalent or trivalent atom selected from the group consisting of divalent linking atoms R⁷ and trivalent nitrogen atoms -N< and -N=, in which "=" symbolizes a double bond; or
a divalent or trivalent linking functional group selected from the group consisting of - NH-, -N(-R⁶)- -NH-C(=R⁸) -, -NH[-C(=R⁸)-]₂, -NH-C(=R⁸)-NH-, -NH-C(=R⁸)-R⁷-, -NH-C (=R⁸)-NH-C (=R⁸)-R⁷-, -R⁷-N=, -R⁷-NH-C(=R⁸)- , and -NH-C(=R⁸)-NH-N=C< , in which "=R⁸" , R⁷, and R⁶ are as defined above;
R¹³ is a monovalent inert organic radical R⁶ or a group of the general formula VIII:
**-R¹⁴(-R¹⁵)ₒ** (VIII),
in which the index o is as defined above and the radicals R¹⁴ and R¹⁵ are as defined below;
R¹⁴ is an at least divalent inert organic radical; and
R¹⁵ is a silane group of the general formula V,
or
(b) in a second alternative reacting at least one compound of the general formula XI:
**R⁹(-R¹²-H)_{q}** (XI),
in which the index and the variables are as defined above, with at least one compound of the general formula XII:
**R⁸=C=N-R¹⁴ (-R¹⁵)ₒ** (XII),
in which the index and the variables are as defined above.

6. Laminates as defined in either of Claims 1 and 2, producible using a curable mixture (A/B) comprising
(A) at least one phosphonic diester and/or at least one diphosphonic diester and
(B) at least one compound containing at least two condensable silane groups,
as coupling agent.

7. Process for producing laminates according to Claim 6, **characterized in that**
(I) a thermally curable coating material comprising a curable mixture (A/B) comprising
(A) at least one phosphonic diester and/or at least one diphosphonic diester and
(B) at least one compound containing at least two condensable silane groups,
is applied as coupling agent to an uncoated or precoated substrate, to give a layer of the coating material,
(II) curing the layer of the coating material on its own or together with at least one layer below it, composed of a different coating material, to give a coating,
(III) applying an adhesive to the coating in the region in which the substrate is to be joined to the sheet via the coating and the adhesive layer, to give the layer of adhesive, and
(IV) joining the layer of adhesive to the sheet and subjecting the bond to curing, to give the adhesive layer.

8. Thermally curable mixtures comprising at least one thermally curable polyester (C) and a curable mixture (A/B) comprising
(A) at least one phosphonic diester and/or at least one diphosphonic diester and
(B) at least one compound containing at least two condensable silane groups,
as coupling agent.

9. Thermally curable mixtures according to Claim 8, **characterized in that** the phosphonic diesters and the diphosphonic diesters (A) are selected from the group consisting of acyclic phosphonic diesters, cyclic phosphonic diesters, acyclic diphosphonic diesters, cyclic diphosphonic diesters, and cyclic-acyclic diphosphonic diesters.

10. Thermally curable mixtures according to Claim 8, **characterized in that** the condensable silane group of the compound (B) has the general formula V:
**-SiR⁵ₘR⁶₃₋ₘ** (V),
in which the index and the variables have the following definitions:
m is an integer from 1 to 3;
R⁵ is a monovalent condensable atom or monovalent condensable organic radical; and
R⁶ is a monovalent inert organic radical.

11. Thermally curable mixtures according to Claim 10, **characterized in that** the compounds (B) are preparable by
(a) in a first alternative reacting at least one compound of the general formula IX:
**R⁹(N=C=R⁸)_{q}** (IX),
in which the index q is an integer from 1 to 10, the variable R⁹ is an at least monovalent inert organic radical and R⁸ is an oxygen atom or a sulfur atom, with at least one compound of the general formula X:
**H-R¹²[-R¹³]ₙ[-R¹⁴(-R¹⁵)ₒ]ₚ** (X),
in which
n is 0 or 1;
o is 1, 2 or 3;
p is 1 or 2;
with the proviso that o = 2 or 3 and/or p = 2 if q = 1;
and with the proviso that o = 2 or 3 and/or p = 2 if R⁹ = monovalent organic radical;
R¹² is a divalent or trivalent atom selected from the group consisting of divalent linking atoms R⁷ and trivalent nitrogen atoms -N< and -N=, in which "=" symbolizes a double bond;
or
a divalent or trivalent linking functional group selected from the group consisting of - NH-, -N(-R⁶)- -NH-C(=R⁸)-, -NH[-C(=R⁸)-]₂, -NH-C(=R⁸)-NH-, -NH-C(=R⁸)-R⁷-, -NH-C(=R⁸)-NH-C(=R⁸)-R⁷-, -R⁷-N=, -R⁷-NH-C (=R⁸)-, and -NH-C(=R⁸)-NH-N=C<, in
which "=R⁸", R⁷, and R⁶ are as defined above;
R¹³ is a monovalent inert organic radical R⁶ or a group of the general formula VIII:
**-R¹⁴(-R¹⁵)ₒ** (VIII),
in which the index o is as defined above and the radicals R¹⁴ and R¹⁵ are as defined below;
R¹⁴ is an at least divalent inert organic radical; and
R¹⁵ is a silane group of the general formula V,
or
(b) in a second alternative reacting at least one compound of the general formula XI:
**R⁹(-R¹²-H)_{q}** (XI),
in which the index and the variables are as defined above, with at least one compound of the general formula XII:
**R⁸=C=N-R¹⁴(-R¹⁵)ₒ** (XII),
in which the index and the variables are as defined above.

## Revendications

1. Utilisation de mélanges durcissables (A/B), contenant :
(A) au moins un diester de l'acide phosphonique et/ou au moins un diester de l'acide diphosphonique et
(B) au moins un composé contenant au moins deux groupes silane condensables,
en tant que promoteurs d'adhésion, **caractérisée en ce que** les promoteurs d'adhésion sont utilisés dans des composites comprenant au moins un substrat, au moins un revêtement, au moins une couche adhésive et au moins une plaque, les promoteurs d'adhésion se trouvant dans le ou les revêtements, et la plaque étant choisie dans le groupe constitué par les pièces moulées optiquement transparentes planes, essentiellement planes et tridimensionnelles.

2. Utilisation selon la revendication 1, **caractérisée en ce que** les promoteurs d'adhésion se trouvent dans le revêtement sur la surface duquel se trouve la couche adhésive.

3. Utilisation selon l'une quelconque des revendications 1 ou 2, **caractérisée en ce que** les diesters de l'acide phosphonique et les diesters de l'acide diphosphonique (A) sont choisis dans le groupe constitué par les diesters de l'acide phosphonique acycliques, les diesters de l'acide phosphonique cycliques, les diesters de l'acide diphosphonique acycliques, les diesters de l'acide diphosphonique cycliques et les diesters de l'acide diphosphonique cycliques-acycliques.

4. Utilisation selon l'une quelconque des revendications 1 à 3, **caractérisée en ce que** le groupe silane condensable du composé (B) a la formule générale V :
-SiR⁵ₘR⁶₃₋ₘ (V)
dans laquelle l'indice et les variables ont la signification suivante :
m nombre entier de 1 à 3 ;
R⁵ atome condensable monovalent ou radical organique condensable monovalent ;
R⁶ radical organique inerte monovalent.

5. Utilisation selon la revendication 4, **caractérisée en ce que** les composés (B) peuvent être fabriqués par
(a) selon une première variante, mise en réaction d'au moins un composé de formule générale IX :
R⁹(N=C=R⁸)_{q} (IX)
dans laquelle l'indice q représente un nombre entier de 1 à 10, la variable R⁹ représente un radical organique inerte au moins monovalent et R⁸ représente un atome d'oxygène ou un atome de soufre, avec au moins un composé de formule générale X :
H-R¹²[-R¹³]ₙ[-R¹⁴(-R¹⁵)ₒ]_{q} (X)
dans laquelle
n représente 0 ou 1 ;
o représente 1, 2 ou 3 ;
p représente 1 ou 2 ;
à condition que o = 2 ou 3 et/ou p = 2 lorsque q = 1 ; et à condition que o = 2 ou 3 et/ou p = 2 lorsque R⁹ = radical organique monovalent ;
R¹² représente un atome bivalent ou trivalent, choisi dans le groupe constitué par les atomes R⁷ bivalents de liaison et les atomes d'azote trivalents -N< et -N=, « = » symbolisant une double liaison ; ou
un groupe fonctionnel de liaison bivalent ou trivalent choisi dans le groupe constitué par -NH-, -N-(-R⁶)- -NH-C(=R⁸)-, -NH[-C(=R⁸)-]₂, -NH-C(=R⁸)-NH-, -NH-C(=R⁸)-R⁷-, -NH-C(=R⁸) -NH-C(=R⁸) -R⁷-, -R⁷-N=, -R⁷-NH-C(=R⁸)- et -NH-C(=R⁸)-NH-N=C<, « =R⁸ », R⁷ et R⁶ ayant la signification indiquée précédemment ;
R¹³ représente un radical R⁶ organique inerte monovalent ou un groupe de formule générale VIII :
-R¹⁴(-R¹⁵)ₒ (VIII)
l'indice o ayant la signification indiquée précédemment et les radicaux R¹⁴ et R¹⁵ ayant la signification indiquée ultérieurement ;
R¹⁴ représente un radical organique inerte au moins bivalent ;
R¹⁵ représente un groupe silane de formule générale V ou
(b) selon une seconde variante, mise en réaction d'au moins un composé de formule générale XI :
R⁹(-R¹²-H)_{q} (XI)
dans laquelle l'indice et les variables ont la signification indiquée précédemment, avec au moins un composé de formule générale XII :
R⁸=C=N-R¹⁴ (-R¹⁵)ₒ (XII)
dans laquelle l'indice et les variables ont la signification indiquée précédemment.

6. Composites, tels que définis dans l'une quelconque des revendications 1 ou 2, pouvant être fabriqués en utilisant un mélange durcissable (A/B), contenant :
(A) au moins un diester de l'acide phosphonique et/ou au moins un diester de l'acide diphosphonique et
(B) au moins un composé contenant au moins deux groupes silane condensables,
en tant que promoteur d'adhésion.

7. Procédé de fabrication de composites selon la revendication 6, **caractérisé en ce que**
(I) un agent de revêtement thermiquement durcissable contenant un mélange durcissable (A/B), contenant :
(A) au moins un diester de l'acide phosphonique et/ou au moins un diester de l'acide diphosphonique et
(B) au moins un composé contenant au moins deux groupes silane condensables,
en tant que promoteur d'adhésion, est appliqué sur un substrat non revêtu ou pré-revêtu, une couche de l'agent de revêtement en résultant,
(II) la couche de l'agent de revêtement est durcie seule ou conjointement avec au moins une couche sous-jacente d'un autre agent de revêtement, un revêtement en résultant,
(III) un agent adhésif est appliqué sur le revêtement dans la zone où le substrat doit être relié avec la plaque par le revêtement et la couche adhésive, une couche d'agent adhésif en résultant, et
(IV) la couche d'agent adhésif est reliée avec la plaque et durcie, la couche adhésive en résultant.

8. Mélanges thermiquement durcissables, contenant au moins un polyester (C) thermiquement durcissable et un mélange durcissable (A/B), contenant :
(A) au moins un diester de l'acide phosphonique et/ou au moins un diester de l'acide diphosphonique et
(B) au moins un composé contenant au moins deux groupes silane condensables,
en tant que promoteurs d'adhésion.

9. Mélanges thermiquement durcissables selon la revendication 8, **caractérisés en ce que** les diesters de l'acide phosphonique et les diesters de l'acide diphosphonique (A) sont choisis dans le groupe constitué par les diesters de l'acide phosphonique acycliques, les diesters de l'acide phosphonique cycliques, les diesters de l'acide diphosphonique acycliques, les diesters de l'acide diphosphonique cycliques et les diesters de l'acide diphosphonique cycliques-acycliques.

10. Mélanges thermiquement durcissables selon la revendication 8, **caractérisés en ce que** le groupe silane condensable du composé (B) a la formule générale V :
-SiR⁵ₘR⁶₃₋ₘ (V)
dans laquelle l'indice et les variables ont la signification suivante :
m nombre entier de 1 à 3 ;
R⁵ atome condensable monovalent ou radical organique condensable monovalent ;
R⁶ radical organique inerte monovalent.

11. Mélanges thermiquement durcissables selon la revendication 10, **caractérisés en ce que** les composés (B) peuvent être fabriqués par
(a) selon une première variante, mise en réaction d'au moins un composé de formule générale IX :
R⁹(N=C=R⁸)_{q} (IX)
dans laquelle l'indice q représente un nombre entier de 1 à 10, la variable R⁹ représente un radical organique inerte au moins monovalent et R⁸ représente un atome d'oxygène ou un atome de soufre, avec au moins un composé de formule générale X :
H-R¹²[-R¹³]ₙ[-R¹⁴(-R¹⁵)ₒ]ₚ (X)
dans laquelle
n représente 0 ou 1 ;
o représente 1, 2 ou 3 ;
p représente 1 ou 2 ;
à condition que o = 2 ou 3 et/ou p = 2 lorsque q = 1 ; et à condition que o = 2 ou 3 et/ou p = 2 lorsque R⁹ = radical organique monovalent ;
R¹² représente un atome bivalent ou trivalent, choisi dans le groupe constitué par les atomes R⁷ bivalents de liaison et les atomes d'azote trivalents -N< et -N=, « = » symbolisant une double liaison ; ou
un groupe fonctionnel de liaison bivalent ou trivalent choisi dans le groupe constitué par -NH-, -N-(-R⁶)- -NH-C(=R⁸)-, -NH[-C(=R⁸)-]₂, -NH-C(=R⁸)-NH-, -NH-C(=R⁸)-R⁷-, -NH-C(=R⁸) -NH-C(=R⁸)-R⁷-, -R⁷-N=, -R⁷-NH-C(=R⁸)- et -NH-C(=R⁸)-NH-N=C< , « =R⁸ » , R⁷ et R⁶ ayant la signification indiquée précédemment ;
R¹³ représente un radical R⁶ organique inerte monovalent ou un groupe de formule générale VIII :
-R¹⁴(-R¹⁵) ₒ (VIII)
l'indice o ayant la signification indiquée précédemment et les radicaux R¹⁴ et R¹⁵ ayant la signification indiquée ultérieurement ;
R¹⁴ représente un radical organique inerte au moins bivalent ;
R¹⁵ représente un groupe silane de formule générale V ou
(b) selon une seconde variante, mise en réaction d'au moins un composé de formule générale XI :
R⁹(-R¹²-H)_{q} (XI)
dans laquelle l'indice et les variables ont la signification indiquée précédemment, avec au moins un composé de formule générale XII :
R⁸=C=N-R¹⁴ (-R¹⁵) ₒ (XII)
dans laquelle l'indice et les variables ont la signification indiquée précédemment.
